# EUROPEAN PATENT SPECIFICATION

(11) **EP 4 403 073 B1**
(45) Date of publication and mention of the grant of the patent: **06.08.2025**
(21) Application number: 22883872.8
(22) Date of filing: 13.10.2022
(51) Int. Cl.: A47C 27/08, A47C 31/12, B29C 65/02, B29C 65/00

(54) **AIR MATTRESS AND METHOD FOR MANUFACTURING AIR MATTRESS**
LUFTMATRATZE UND VERFAHREN ZUR HERSTELLUNG EINER LUFTMATRATZE
MATELAS PNEUMATIQUE ET SON PROCÉDÉ DE FABRICATION

(30) Priority: 22.10.2021 KR 20210141876
(43) Date of publication of application: 24.07.2024
(73) Proprietor: Yang, Kwan-Sik, Cheonan-si, Chungcheongnam-do 31261 (KR)
(72) Inventor: Yang, Kwan-Sik, Cheonan-si, Chungcheongnam-do 31261 (KR)
(74) Representative: Winter, Brandl - Partnerschaft mbB
(86) International application number: PCT/KR2022/015476
(87) International publication number: WO 2023/068649

(56) References cited:
- CN-A- 101 095 587
- KR-A- 20040 017 889
- KR-A- 20150 134 615
- KR-A- 20190 072 755
- KR-B1- 101 872 118
- KR-B1- 102 141 884
- KR-Y1- 200 236 609

## Description

### Technical Field

The present disclosure relates to an air mattress, in which, when used as a mat, an air layer inflated into a sealed space formed by a bilaminar airtight fabrics and a bonding line between the bilaminar airtight fabrics supports a user's weight to provide insulation and cushioning between the user and the floor, and which when not used, is deflated to reduce the volume and is folded for easy handling, and a method of manufacturing an air mattress.

### Background Art

In general, an air mattress is formed with airtight fabric in a rectangular shape with a predetermined height to be sealed, and has one or more valves to inject air. By inflating and deflating air through the valves, it is convenient for transportation and movement, and the air mattress can be used not only for leisure activities such as hiking and traveling but also as a medical device for preventing bedsores. The air mattress includes not only an air layer inside but also reinforcing bars erecting inside to connect the top and bottom, or fiber yarns penetrating from top to bottom and formed continuously and densely, thereby preventing twisting and slipping during use and facilitating contact with the curved human body.

However, such a conventional air mattress as described above has a disadvantage in that in the case in which the reinforcing bars are formed inside, the reinforcing bars may be detached and the detached reinforcing bars are neglected inside due to difficult repairing, causing deterioration in cushioning. Moreover, in the case in which the air mattress is formed with a plurality of fiber yarns, the flatness of the air mattress decreases due to entangled fibers, and if some fiber yarns are broken and continuously loosened, airtightness and sealability are deteriorated.

The background technology of the present invention is disclosed in Korean Utility Model Registration No. 20-0388951, published on June 28, 2005.

The document KR 2015 0134615 A discloses an air mattress according to the state of the art.

### Disclosure

### Technical Problem

Accordingly, the present invention has been made in view of the above-mentioned problems occurring in the related art, and it is an object of the present invention to provide an air mattress, which overcomes the problems of the conventional air mattresses: insufficient insulation and cushioning between a user and the floor due to excessive sagging of the part where the user's weight is applied; difficulty in the user's moving or turning over on the air mattress due to the large height difference between the part sagged by the user's weight and the part to which the user's weight is not applied and which swells due to the ballooning effect and a wide contact (friction) area between the user and the air mattress; the need to inflate air orally or the need to prepare an air pump; the discontinuity when inflating or deflating air with an air pump; the risk that a person who steps the air mattress may lose balance and fall over due to the height of the air-filled mattress; and the difficulty in dehydration when washing as the air mattress is made of airtight fabric, and a method of manufacturing an air mattress.

### Technical Solution

To accomplish the above object, according to the present invention, there is provided an air mattress, which includes a plurality of air pockets 210 that can allow or block the flow of air filled in the air mattress, such that the air pockets 210 support a user's weight in a state in which the flow of air blocked between the air pockets, to alleviate excessive sagging of the part where the user's weight is applied, which was shown in the conventional air mattress, thereby providing insulation and cushioning between the user and the floor, and allowing the user to more easily move or turn over on the air mattress by reducing the height difference between the part sagged by the user's weight and the part to which the user's weight is not applied and the contact (friction) area between the user and the air mattress. Moreover, some portions of the air mattress serve as air pumps 230, 240, 330 and 340, so there is no need to blow air into the air mattress orally or prepare an air pump. Furthermore, two pocket-system air suction pumps 230, two tube-system air suction pumps 330, one pocket-system air discharge pump 240, and one tube-system air discharge pump 340 are provided in pair, such that pressure is applied to the paired pumps, thereby continuously injecting and discharging air. Additionally, heat-fused points 500 are formed by pressing and thermally fusing a central position or some portions of the mattress member 100 on the plane of the air pockets 210 at regular intervals to allow an appropriate adjustment of the height of the air mattress filled with air, thereby reducing the risk that a person who steps the air mattress filled with air loses balance and falls over. In addition, holes or gaps 600 assisting drainage are located in the heat-fused points 500, thereby making dehydration easy when the air mattress made of airtight synthetic resin fabric is washed.

### Advantageous Effect

According to an embodiment of the present invention, the air mattress and the method of manufacturing the air mattress can provide insulation and cushioning between the user and the floor by alleviating excessive sagging of the part where the user's weight is applied, can allow the user to more easily move or turn over on the air mattress by reducing the height difference between the part sagged by the user's weight and the part to which the user's weight is not applied and the contact (friction) area between the user and the air mattress, do not need to inflate air orally or to prepare an air pump, can continuously inflate or deflate air, and can reduce the risk that a person who steps the air mattress filled with air may lose balance and fall over, and can make dehydration easy when washing.

### Description of Drawings

FIG. 1 is a plan view illustrating an air mattress according to an embodiment of the present invention.
FIG. 2 is a perspective view illustrating an air mattress according to an embodiment of the present invention.
FIG. 3 is an exploded perspective view illustrating an air mattress according to an embodiment of the present invention.
FIG. 4 is a plan view illustrating the airflow of a pocket system 200 according to the present invention.
FIG. 5 is a plan view illustrating the airflow of a tube system 300 according to the present invention.
FIGS. 6(a), 6(b), and 6(c) are diagrams illustrating the airflow at a connection part 220 between air pockets according to the present invention.
FIGS. 7(a), 7(b), and 7(c) are diagrams illustrating a state in which the airflow at the connection part 220 between air pockets is blocked according to the present invention.
FIG. 8 is a plan view illustrating an air mattress according to an embodiment of the present invention.
FIG. 9 is a diagram illustrating the configuration of air pumps 230, 240, 330, and 340 according to the present invention.
FIG. 10 is a flowchart illustrating a manufacturing process of the air mattress according to the present invention.

### Mode for Invention

Hereinafter, the present invention will be described in detail with reference to the attached drawings.

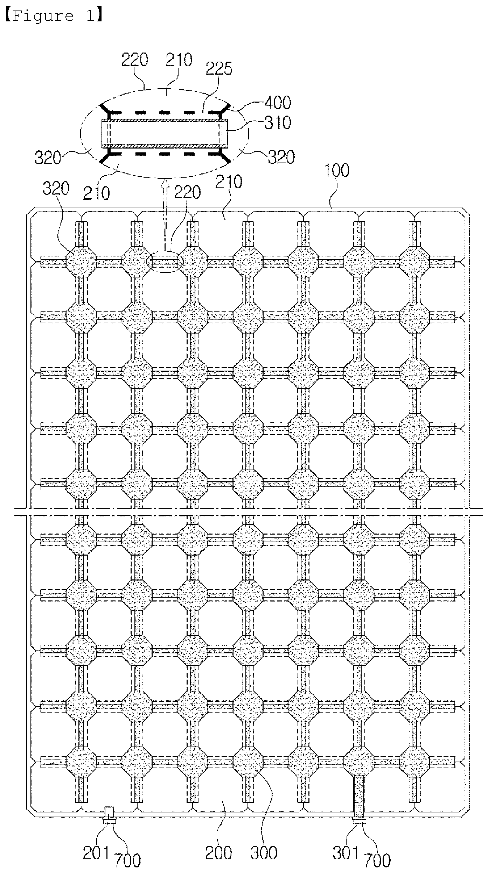

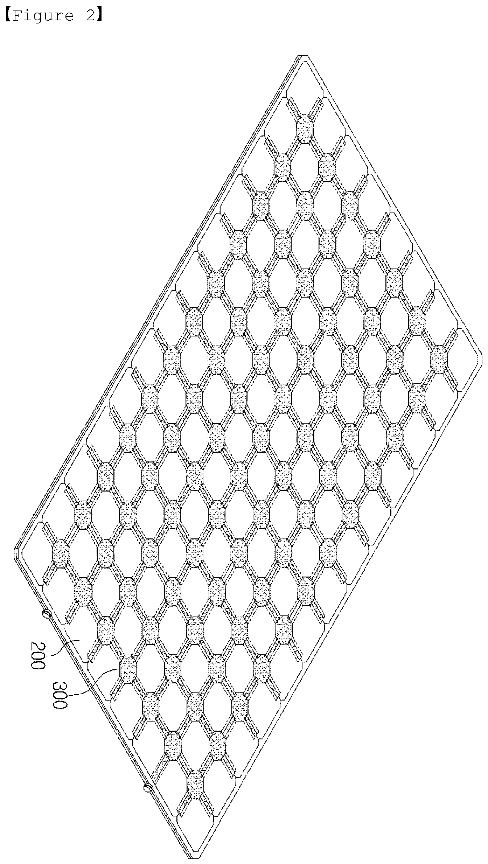

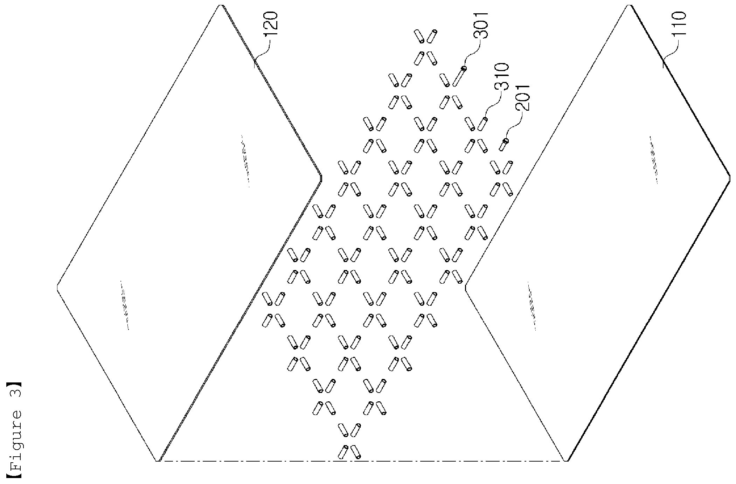

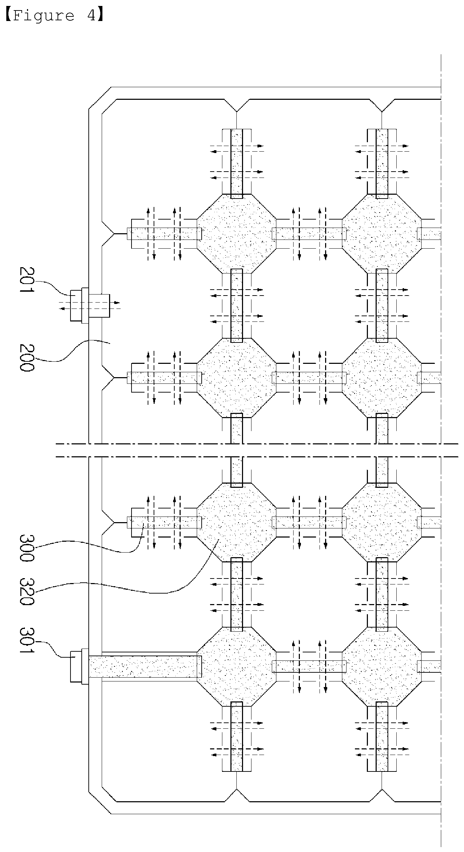

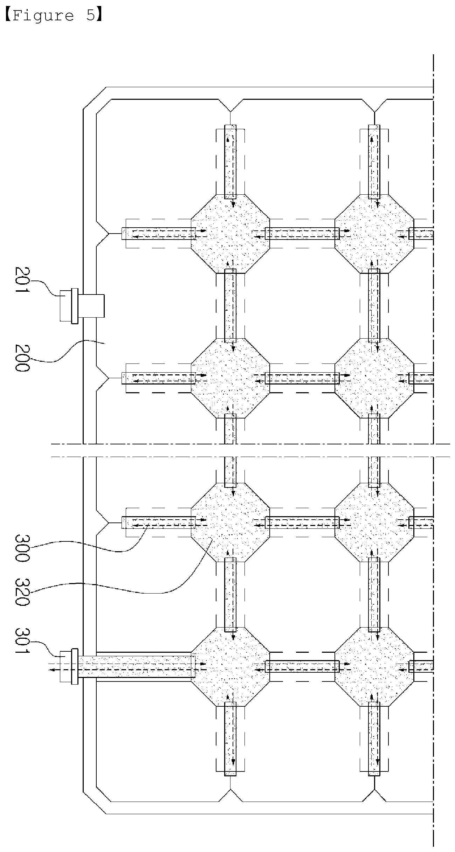

As illustrated in FIGS. 1 to 3, an air mattress according to an embodiment of the present invention includes: thermal fusion lines 400 formed by pressing and thermally fusing a pocket-system air suction/discharge hole 201, a tube-system suction/discharge hole 301, and tube members 310 arranged between a lower sheet 110 and an upper sheet 120 as illustrated in the drawings; an air system 200 (called a pocket system) with an airflow illustrated in FIG. 4, which includes the pocket-system air suction/discharge hole 201, air pockets 210, and connection parts 220 between the air pockets bordering the tube members 310 and serves to support a user's weight; and an air system 300 (called a tube system) with an airflow illustrated in FIG. 5, which includes the tube-system suction/discharge hole 301, the tube members 310, and communication parts 320 and serves to block the airflow between the air pockets 210.

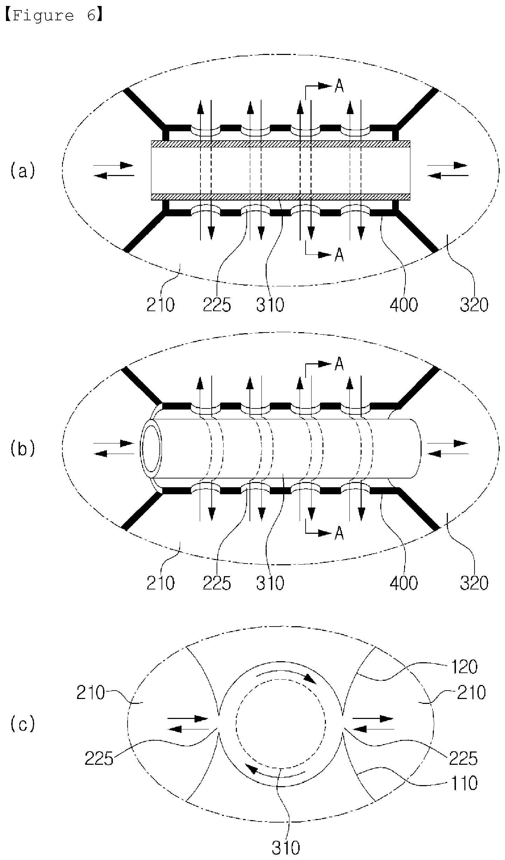

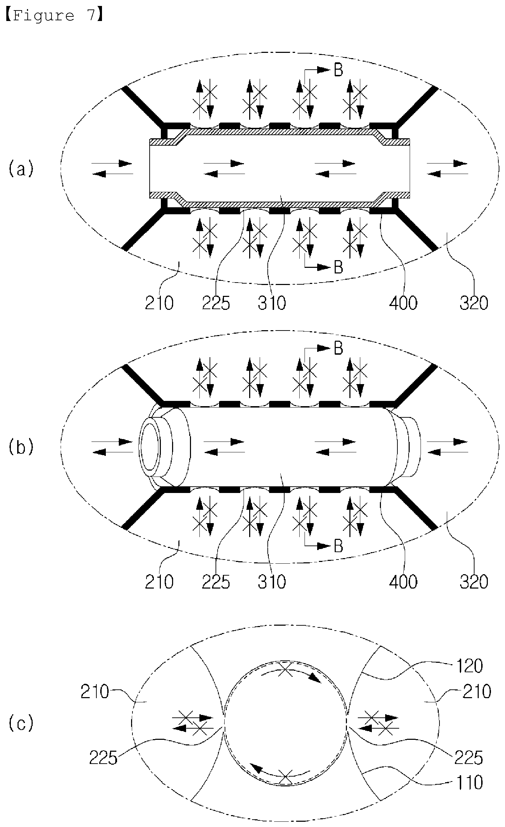

When air is first injected into the pocket system 200, as illustrated in FIG. 6, an air flow between the air pockets 210 is allowed into gaps among air communication holes 225, which are formed by intentionally skipping heat-fusion at the connection parts 220 between the air pockets, a mattress member 100, and the tube members 310, such that the entire pocket system 200 is filled with air. Next, when air is injected into the tube system 300 at a higher pressure than the pocket system 200, the tube members 310 expand to block the gaps among the air communication holes 225, which are formed by intentionally skipping heat-fusion at the connection parts 220 between the air pockets, the mattress member 100, and the tube members 310, such that the airflow between the air pockets is blocked as illustrated in FIG. 7, and the air pockets 210 support the user's weight to alleviate excessive sagging of the part where the user's weight is applied, which was shown in the conventional air mattress, thereby providing insulation and cushioning between the user and the floor, and allowing the user to more easily move or turn over on the air mattress by reducing the height difference between the part sagged by the user's weight and the part to which the user's weight is not applied and the contact (friction) area between the user and the air mattress.

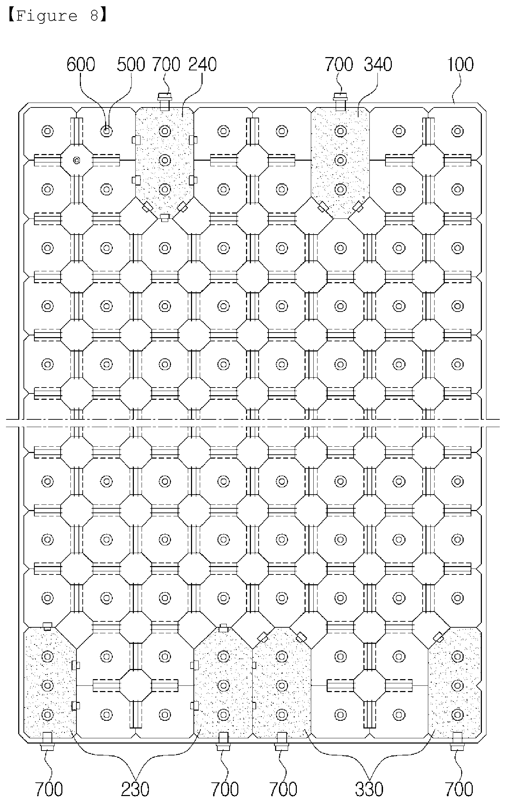

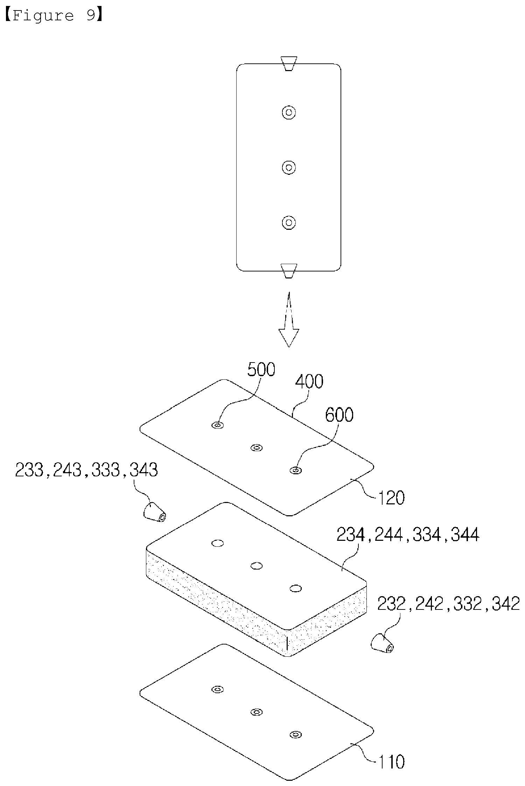

As illustrated in FIG. 9, specific spaces formed by thermal fusion lines 400 between the mattress members 100 are filled with elastic bodies 234, 244, 334, and 344, and suction holes 232, 242, 332, and 342 and discharge holes 233, 243, 333, and 343 having check valves allowing airflow in only one direction are provided across the thermal fusion lines 400. When pressure is applied to the elastic bodies 234, 244, 334, and 344, air contained in the elastic bodies 234, 244, 334, and 344 is sent to the discharge holes 233, 243, 333, and 343. When the pressure applied to the elastic bodies 234, 244, 334, and 344 is removed, air is inhaled into the suction holes 232, 242, 332, and 342 by the restoring force. When the above processes are repeated, since air pumps 230, 240, 330, and 340 serving as a pump are formed in the air mattress as illustrated in FIG. 8, there is no need to blow air into the air mattress orally or prepare an air pump.

As illustrated in FIG. 8, two pocket-system air suction pumps 230, two tube-system air suction pumps 330, one pocket-system air discharge pump 240, and one tube-system air discharge pump 340 are provided in pair and alternately apply pressure to continuously inject and discharge air.

As illustrated in FIG. 8, there are heat-fused points 500 formed by pressing and thermally fusing a central position or some portions of the mattress member 100 on the plane of the air pockets 210 at regular intervals to allow an appropriate adjustment of the height of the air mattress filled with air, thereby reducing the risk that a person who steps the air mattress filled with air may lose balance and fall over.

As illustrated in FIG. 8, there are holes or gaps 600 which penetrate the mattress member 100 and are located in the heat-fused points 500 to assist in water drainage, thereby making dehydration easy when the air mattress made of airtight synthetic resin fabric is washed.

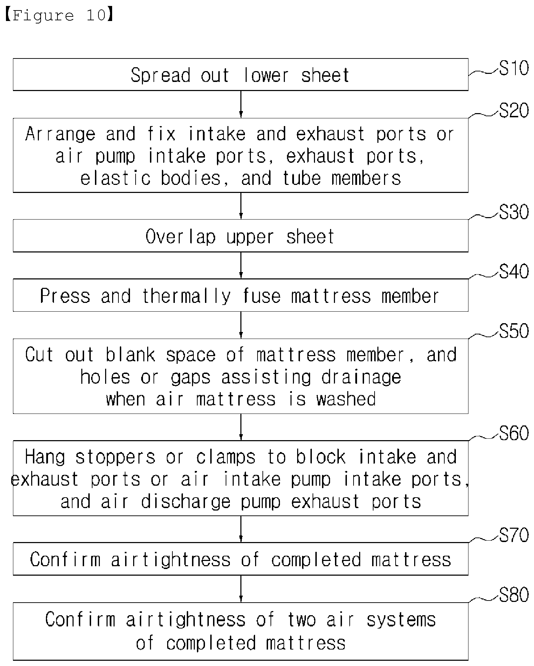

As illustrated in FIG. 10, the method for manufacturing the air mattress according to the present invention includes: a step (S10) of spreading out the lower sheet 110; a step (S20) of arranging and fixing the suction/discharge holes 201 and 301 or the air pump suction holes 232, 242, 332, and 342, the discharge holes 233, 243, 333, and 343, the elastic bodies 234, 244, 334, and 344, and the tube members 310; a step (S30) of overlapping the upper sheet 120; a step (S40) of pressing and thermally fusing the mattress member 100; a step (S50) of cutting out the blank space of the mattress member 100 and the holes or the gaps 600 assisting drainage when the air mattress is washed; a step (S60) of hanging stoppers or clamps 700 to block the suction/discharge holes 201 and 301 or the air pump suction holes 232 and 332, and the air pump discharge holes 243 and 343; a step (S70) of filling two air systems of the completed air mattress with air and immersing in liquid to confirm the airtightness by checking whether bubbles are generated; and a step (S80) of deflating one of the air systems of the completed air mattress and inflating the other one of the air systems to confirm airtightness between the two air systems by observing whether the deflated air system is swollen.

## Claims

1. An air mattress, in which, when used as a mat, an air layer inflated into a sealed space formed by a bilaminar airtight fabrics and a bonding line between the bilaminar airtight fabrics supports a user's weight to provide insulation and cushioning between the user and the floor, and which when not used, is deflated to reduce the volume and is folded for easy handling, the air mattress comprising:
thermal fusion lines (400) formed by pressing and thermally fusing a pocket-system air suction/discharge hole (201), a tube-system suction/discharge hole (301), and tube members (310) arranged between a lower sheet (110) and an upper sheet (120); a pocket system, which includes the pocket-system air suction/discharge hole (201), air pockets (210), and connection parts (220) between the air pockets bordering the tube members (310), and serves to support a user's weight; and a tube system (300), which includes the tube-system suction/discharge hole (301), the tube members (310), and communication parts (320), and serves to block the airflow between the air pockets (210),
wherein when air is first injected into the pocket system (200), an air flow between the air pockets (210) is allowed into gaps among air communication holes (225), a mattress member (100), and the tube members (310), such that the entire pocket system (200) is filled with air, and when air is injected into the tube system (300) at a higher pressure than the pocket system (200), the tube members (310) expand to block the gaps among the air communication holes (225), the mattress member (100), and the tube members (310) such that the airflow between the air pockets (210) is blocked and the air pockets (210) support the user's weight to alleviate excessive sagging of the part where the user's weight is applied, thereby providing insulation and cushioning between the user and the floor, and allowing the user to more easily move or turn over on the air mattress by reducing the height difference between the part sagged by the user's weight and the part to which the user's weight is not applied and the contact (friction) area between the user and the air mattress.

2. The air mattress according to claim 1, wherein some portions of the air mattress serve as air pumps (230, 240, 330, 340), so there is no need to blow air into the air mattress orally or prepare an air pump.

3. The air mattress according to claim 1, wherein two pocket-system air suction pumps (230), two tube-system air suction pumps (330), one pocket-system air discharge pump (240), and one tube-system air discharge pump (340) are provided in pair, such that pressure is applied to the paired pumps to continuously inject and discharge air.

4. The air mattress according to claim 1, wherein heat-fused points (500) are formed by pressing and thermally fusing a central position or some portions of the mattress member (100) on the plane of the air pockets (210) at regular intervals to allow an appropriate adjustment of the height of the air mattress filled with air, thereby reducing the risk that a person who steps the air mattress filled with air loses balance and falls over.

5. The air mattress according to claim 1, wherein holes or gaps (600) which penetrate the mattress member (100) to assist drainage are located in the heat-fused points (500), thereby making dehydration easy when the air mattress made of airtight synthetic resin fabric is washed.

6. A method of manufacturing an air mattress comprising the steps of:
spreading out a lower sheet (110);
arranging and fixing suction/discharge holes (201, 301) or air pump suction holes (232, 242, 332, 342), discharge holes (233, 243, 333, 343), elastic bodies (234, 244, 334, 344), and tube members (310);
overlapping an upper sheet (120);
pressing and thermally fusing a mattress member (100);
cutting out a blank space of the mattress member (100) and holes or the gaps (600) assisting drainage when the air mattress is washed;
hanging stoppers or clamps (700) to block the suction/discharge holes (201, 301) or the air pump suction holes (232, 332), and the air pump discharge holes (243, 343);
filling two air systems of the completed air mattress with air and immersing in liquid to confirm the airtightness by checking whether bubbles are generated; and
deflating one of the air systems of the completed air mattress and inflating the other one of the air systems to confirm airtightness between the two air systems by observing whether the deflated air system is swollen.

## Patentansprüche

1. Luftmatratze, bei der, wenn sie als Matte verwendet wird, eine Luftschicht, die in einen durch ein zweilagiges luftdichtes Gewebe und eine Verbindungslinie zwischen dem zweilagigen luftdichten Gewebe gebildeten geschlossenen Raum aufgeblasen ist, das Gewicht eines Anwenders trägt, um eine Isolierung und Polsterung zwischen dem Anwender und dem Boden vorzusehen, und die, wenn sie nicht verwendet wird, entleert ist, um das Volumen zu verringern, und zur einfachen Handhabung gefaltet ist, wobei die Luftmatratze aufweist:
thermische Fusionslinien (400), die durch Pressen und thermisches Verschmelzen einer Taschen-System-Luftansaug-/Ablassöffnung (201), einer Rohr-System-Ansaug-/Ablassöffnung (301) und von Rohr-Elementen (310), die zwischen einer unteren Folie (110) und einer oberen Folie (120) angeordnet sind, gebildet sind; einem Taschensystem, das die Taschen-System-Luftansaug-/Ablassöffnung (201), Lufttaschen (210) und Verbindungsteile (220) zwischen den Lufttaschen, die an die Rohrteile (310) angrenzen, und dazu dient, das Gewicht eines Anwenders zu tragen; und ein Rohrsystem (300), das die Rohr-System-Ansaug-/Ablassöffnung (301), die Rohrteile (310) und Verbindungsteile (320) aufweist und dazu dient, den Luftstrom zwischen den Lufttaschen (210) zu blockieren,
wobei, wenn Luft zuerst in das Taschen-System (200) injiziert wird, ein Luftstrom zwischen den Lufttaschen (210) in Lücken zwischen Luftverbindungslöchern (225), einem Matratzenelement (100) und den Rohrteilen (310) ermöglicht wird, so dass das gesamte Taschen-System (200) mit Luft gefüllt wird, und wenn Luft mit einem höheren Druck als im Taschen-System (200) in das Rohr-System (300) eingeblasen wird, sich die Rohrteile (310) ausdehnen, um die Lücken zwischen den Luftverbindungslöchern (225), dem Matratzenelement (100) und den Rohrteilen (310) zu blockieren, so dass der Luftstrom zwischen den Lufttaschen (210) blockiert wird und die Lufttaschen (210) das Gewicht des Anwenders tragen, um ein übermäßiges Durchhängen des Teils, auf den das Gewicht des Anwenders einwirkt, zu verringern, wodurch eine Isolierung und Polsterung zwischen dem Anwender und dem Boden vorgesehen ist und es dem Anwender ermöglicht wird, sich auf der Luftmatratze einfacher zu bewegen oder umzudrehen, indem der Höhenunterschied zwischen dem durch das Gewicht des Anwenders durchhängenden Teil und dem Teil, auf den das Gewicht des Anwenders nicht einwirkt, und die Kontakt (Reibungs-)Gegend zwischen dem Anwender und der Luftmatratze verringert wird.

2. Luftmatratze gemäß Anspruch 1, wobei einige Abschnitte der Luftmatratze als Luftpumpen (230, 240, 330, 340) dienen, so dass es nicht erforderlich ist, Luft in die Luftmatratze mit dem Mund zu blasen oder eine Luftpumpe vorzubereiten.

3. Luftmatratze gemäß Anspruch 1, wobei zwei Taschen-System-Luftansaugpumpen (230), zwei Schlauch-System-Luftansaugpumpen (330), eine Taschen-System-Luftablasspumpe (240) und eine Schlauch-System-Luftablasspumpe (340) paarweise vorgesehen sind, so dass Druck auf die gepaarten Pumpen ausgeübt wird, um kontinuierlich Luft einzuspritzen und auszulassen.

4. Luftmatratze nach Anspruch 1, wobei Wärmeverschweißungspunkte (500) gebildet sind, indem eine mittlere Position oder einige Abschnitte des Matratzenelements (100) auf der Ebene der Lufttaschen (210) in regelmäßigen Abständen gepresst und thermisch verschweißt werden, um eine geeignete Einstellung der Höhe der mit Luft gefüllten Luftmatratze zu ermöglichen, wodurch das Risiko verringert wird, dass eine Person, die auf die mit Luft gefüllte Luftmatratze tritt, das Gleichgewicht verliert und umfällt.

5. Luftmatratze gemäß Anspruch 1, wobei Löcher oder Spalten (600), die das Matratzenelement (100) durchdringen, um die Entwässerung zu unterstützen, in den Wärmeverschweißungspunkten (500) angeordnet sind, wodurch die Entwässerung erleichtert wird, wenn die aus luftdichtem Kunststoffstoff hergestellte Luftmatratze gewaschen wird.

6. Verfahren zur Herstellung einer Luftmatratze, umfassend die folgenden Schritte:
Ausbreiten einer unteren Folie (110);
Anordnen und Befestigen von Ansaug-/Ablassöffnungen (201, 301) oder Luftpumpen-Ansaugöffnungen (232, 242, 332, 342), Ablassöffnungen (233, 243, 333, 343), elastischen Körpern (234, 244, 334, 344) und Rohrteilen (310);
Überlagern einer oberen Folie (120);
Pressen und thermisches Verschmelzen eines Matratzenelements (100);
Ausschneiden eines Leerraums des Matratzenelements (100) und Löcher oder die Spalten (600), die die Entwässerung beim Waschen der Luftmatratze unterstützen;
Anhängen von Stoppern oder Klammern (700), um die Ansaug-/Ablassöffnungen (201, 301) oder die Luftpumpen-Ansaugöffnungen (232, 332) und die Luftpumpen-Ablassöffnungen (243, 343) zu blockieren;
Befüllen von beiden Luftsystemen der fertigen Luftmatratze mit Luft und Eintauchen in Flüssigkeit, um die Luftdichtheit durch Überprüfen auf Blasenbildung zu bestätigen; und
Entleeren eines der Luftsysteme der fertigen Luftmatratze und Aufblasen des anderen Luftsystems, um die Luftdichtheit zwischen den beiden Luftsystemen durch Beobachten, ob das entleerte Luftsystem aufgebläht ist, zu bestätigen.

## Revendications

1. Matelas pneumatique, dans lequel, lorsqu'il est utilisé comme tapis, une couche d'air gonflée dans un espace scellé formé par un tissu bilaminaire étanche à l'air et une ligne de liaison entre les tissus bilaminaires étanches à l'air supporte le poids d'un utilisateur pour fournir une isolation et un amortissement entre l'utilisateur et le sol, et qui, lorsqu'il n'est pas utilisé, est dégonflé pour réduire le volume et est plié pour une manipulation aisée, le matelas pneumatique comprenant :
des lignes de fusion thermique (400) formées en pressant et en fusionnant thermiquement un trou d'aspiration/d'évacuation d'air de système de poches (201), un trou d'aspiration/d'évacuation de système de tubes (301) et des éléments tubulaires (310) agencés entre une feuille inférieure (110) et une feuille supérieure (120) ; un système de poches qui inclut le trou d'aspiration/d'évacuation d'air de système de poches (201), des poches d'air (210) et des pièces de raccordement (220) entre les poches d'air bordant les éléments tubulaires (310) et sert à supporter le poids d'un utilisateur ; et un système de tubes (300) qui inclut le trou d'aspiration/d'évacuation de système de tubes (301), les éléments tubulaires (310) et les pièces de communication (320) et sert à bloquer le flux d'air entre les poches d'air (210),
dans lequel, lorsque de l'air est injecté pour la première fois dans le système de poches (200), un flux d'air entre les poches d'air (210) est autorisé dans des espaces entre des trous de communication d'air (225), un élément de matelas (100) et les éléments tubulaires (310) de telle sorte que le système de poches entier (200) soit rempli d'air et, lorsque de l'air est injecté dans le système de tubes (300) à une pression supérieure à celle du système de poches (200), les éléments tubulaires (310) se dilatent pour bloquer les espaces entre les trous de communication d'air (225), l'élément de matelas (100) et les éléments tubulaires (310) de telle sorte que le flux d'air entre les poches d'air (210) soit bloqué et que les poches d'air (210) supportent le poids de l'utilisateur pour atténuer un affaissement excessif de la partie au niveau de laquelle le poids de l'utilisateur est appliqué, ce qui permet de fournir une isolation et un amortissement entre l'utilisateur et le sol et permettant à l'utilisateur de bouger ou de se retourner plus facilement sur le matelas pneumatique en réduisant la différence de hauteur entre la partie affaissée par le poids de l'utilisateur et la partie au niveau de laquelle le poids de l'utilisateur n'est pas appliqué et la zone de contact (frottement) entre l'utilisateur et le matelas pneumatique.

2. Matelas pneumatique selon la revendication 1, dans lequel certaines parties du matelas pneumatique servent de pompes à air (230, 240, 330, 340) de telle sorte qu'il ne soit ni nécessaire de souffler de l'air dans le matelas pneumatique par voie orale, ni de préparer une pompe à air.

3. Matelas pneumatique selon la revendication 1, dans lequel deux pompes d'aspiration d'air de système de poches (230), deux pompes d'aspiration d'air de système de tubes (330), une pompe d'évacuation d'air de système de poches (240) et une pompe d'évacuation d'air de système de tubes (340) sont disposées par paire de telle sorte qu'une pression soit appliquée aux pompes appariées pour injecter et évacuer de l'air en continu.

4. Matelas pneumatique selon la revendication 1, dans lequel des points de fusion thermique (500) sont formés en pressant et en fusionnant thermiquement une position centrale ou certaines parties de l'élément de matelas (100) sur le plan des poches d'air (210) à des intervalles réguliers pour permettre un ajustement approprié de la hauteur du matelas pneumatique rempli d'air, ce qui permet de réduire le risque qu'une personne qui monte sur le matelas pneumatique rempli d'air perde l'équilibre et tombe.

5. Matelas pneumatique selon la revendication 1, dans lequel des trous ou des espaces (600) qui pénètrent dans l'élément de matelas (100) pour faciliter le drainage sont situés dans les points de fusion thermique (500), ce qui facilite une déshydratation lorsque le matelas pneumatique en tissu de résine synthétique étanche à l'air est lavé.

6. Procédé de fabrication d'un matelas pneumatique, comprenant les étapes consistant à :
étaler une feuille inférieure (110) ;
agencer et fixer des trous d'aspiration/d'évacuation (201, 301) ou des trous d'aspiration de pompe à air (232, 242, 332, 342), des trous d'évacuation (233, 243, 333, 343), des corps élastiques (234, 244, 334, 344) et des éléments tubulaires (310) ;
mettre en chevauchement une feuille supérieure (120) ;
presser et fusionner thermiquement un élément de matelas (100) ;
découper un espace vide de l'élément de matelas (100) et des trous ou des espaces (600) facilitant le drainage lorsque le matelas pneumatique est lavé ;
suspendre des bouchons ou des pinces (700) pour bloquer les trous d'aspiration/d'évacuation (201, 301) ou les trous d'aspiration de pompe à air (232, 332) et les trous d'évacuation de pompe à air (243, 343) ;
remplir d'air les deux systèmes d'air du matelas pneumatique terminé et les immerger dans un liquide pour confirmer l'étanchéité à l'air en vérifiant si des bulles sont générées ; et
dégonfler l'un des systèmes d'air du matelas pneumatique terminé et gonfler l'autre des systèmes d'air pour confirmer l'étanchéité à l'air entre les deux systèmes d'air en observant si le système d'air dégonflé est enflé.
